# EUROPÄISCHE PATENTSCHRIFT

(11) **EP 1 253 362 B1**
(45) Veröffentlichungstag und Bekanntmachung des Hinweises auf die Patenterteilung: **08.06.2005**
(21) Anmeldenummer: 02008251.7
(22) Anmeldetag: 18.04.2002
(51) Int. Cl.: F16K 27/04

(54) **Mehrwegeventilgehäuse**
Multi way valve housing
Boîtier d'une soupape à voies multiples

(30) Priorität: 27.04.2001 DE 10120708
(43) Veröffentlichungstag der Anmeldung: 30.10.2002
(73) Patentinhaber: ROBERT BOSCH GMBH, 70442 Stuttgart (DE)
(72) Erfinder: Kulmann, Erwin, 71706 Markgroeningen (DE); Bergmann, Klaus, 70499 Stuttgart (DE)
(74) Vertreter: Maiwald Patentanwalts GmbH

(56) Entgegenhaltungen:
- EP-A- 0 541 307
- EP-A- 0 931 964
- DE-A- 1 917 596

## Beschreibung

### Stand der Technik

Die Erfindung betrifft ein Mehrwegeventil gemäß der im Oberbegriff des Patentanspruches 1 näher definierten Art.

In der Praxis werden Mehrwegeventilgehäuse pneumatischer Mehrwegeventile aus Kunststoff hergestellt, der einen gewissen Glasfaseranteil zur Erhöhung der Stabilität aufweist. Im Betrieb eines pneumatischen Mehrwegeventiles wird ein Schieber zur Ansteuerung mehrerer druckmittelführender Kanäle in einer zentralen Schieberbohrung in axialer Richtung des Mehrwegeventilgehäuses bewegt. Dabei überstreicht der Schieber nacheinander die zur Ansteuerung erforderlichen Steuerkanten des Mehrwegeventilgehäuses, wobei mit zunehmender Betriebsdauer des pneumatischen Mehrwegeventils aufgrund der mechanischen Beanspruchung der Steuerkanten durch die Schieberbewegung in diesem Bereich ein Materialabrieb auftritt.

Dieser Materialabrieb führt jedoch dazu, daß im Bereich der Oberfläche der Schieberbohrung im Kunststoff des Mehrwegeventilgehäuses angeordnete Glasfasern freigelegt werden, die zu einer Beschädigung der Schieberdichtungen führen, was zu einer Beeinträchtigung der Funktionsweise bis hin zum totalen Ausfall des Mehrwegeventiles führt.

Um die Beschädigung der Schieberdichtungen und damit eine eingeschränkte Funktion von derartigen Mehrwegeventilen durch freigelegte Glasfasern zu vermeiden, ist in der Praxis dazu übergegangen worden, in Mehrwegeventilgehäusen Buchsen einzulegen bzw. diese Buchsen vor dem Einspritzvorgang in das Spritzgußwerkzeug einzulegen und die Buchsen in dem Mehrwegeventilgehäuse wenigstens teilweise einzuspritzen.

Aus der DE 197 45 802 A1 ist ein Mehrwegeventilgehäuse aus spritzgegossenem Kunststoff mit einer Schieberbohrung bekannt, die von mehreren druckmittelführenden Kanälen geschnitten oder gekreuzt ist. Im Gehäuseinneren ein Führungselement vorgesehen, das zumindest an einer Stelle der Schieberbohrung die Führung des Längsschiebers übernimmt, wobei sich der Werkstoff des Führungselementes vom Grundwerkstoff des Ventilgehäuses unterscheidet.

Das Führungselement ist in dem Ventilgehäuse derart eingespritzt, daß es zumindest teilweise vom Grundwerkstoff umschlossen ist. An der Außenkontur des Führungselementes ist zur axialen Fixierung in dem Mehrwegeventilgehäuse jeweils mindestens eine ringförmige Nut oder eine zumindest bereichsweise ringförmige Erhebung vorgesehen, welche nach dem Einspritzen eine Verankerung in dem Mehrwegeventilgehäuse darstellt.

Die umspritzten Führungselemente sind dabei derart ausgeführt, daß sie einen druckmittelführenden Kanal übergreifen und zur Ansteuerung von jeweils drei druckmittelführenden Kanälen mit dem Längsschieber als eine sogenannte Doppelbuchse zusammenwirken und jeweils einen Einström- bzw. Ausströmraum des Mehrwegeventilgehäuses, welche den druckmittelführenden Kanälen vor bzw. nachgeschaltet sind, teilweise auskleiden.

Nachteilig dabei ist es jedoch, daß diese Doppelbuchsen teuer sind, da die Herstellung der Buchsen insbesondere auch wegen der kanalseitigen Öffnungen sehr aufwendig ist. Bei der Herstellung eines Mehrwegeventilgehäuses mit solchen Buchsen durch Spritzgießen spielt eine Genauigkeit der Öffnung an der Buchse, die unter anderem durch die Herstelltoleranzen und eine vorgegebene Symmetrie bestimmt wird, eine besondere Rolle, da bei großen Abweichungen ein mehr oder weniger großer, die Funktion beeinträchtigender Grat an der Gehäuseinnenwand entsteht.

Weiter ist es von Nachteil, daß in den druckmittelführenden Kanälen beim Einströmvorgang an dem Übergang zwischen den Kanälen und den Buchsen Verwirbelungen auftreten, die die Durchflußleistung eines Mehrwegeventiles verringern, wobei zum Ausgleich der Reduzierung der Durchflußleistung eine Bauraumverlängerung des Mehrwegeventilgehäuses vorgenommen werden muss, die jedoch unerwünscht ist.

Aus der DE 199 09 288 A1 ist ein Verfahren zur spanlosen Herstellung eines Ventilgehäuses eines Mehrwegeventils bekannt, nach dem ein Ventilgehäuse ohne verlorene Kerne und ohne eine spanende Nachbearbeitung an den Laufbereichen der Schieberdichtungen oder an den Steuerkanten für die Schieber herstellbar ist.

Nachteilig ist dabei jedoch, dass während des Spritzvorgangs zur Herstellung des Mehrwegeventilgehäuses Einlegeteile im Bereich der herzustellenden Schieberbohrung vorgesehen sind, die nach dem Spritzvorgang aus dem Ventilgehäuse ausgepresst werden, was einerseits einen zusätzlichen, die Herstellkosten eines Mehrwegeventilgehäuses erhöhenden Fertigungsschritt erfordert und wodurch andererseits durch den Ausstoßvorgang der Einlegeteile Beschädigungen an der Oberfläche der Schieberbohrung im Bereich der Laufflächen der Schieberdichtungen sowie an einer Abrundung einer gegenüberliegenden Steuerkante der Schieberbohrung verursacht werden können.

Die EP 0 931 964 A2 offenbart ein Mehrwegeventil der gattungsgemäßen Art, welches eine Schieberbohrung für einen Längsschieber aufweist, zu der mehrere druckmittelführende Kanäle führen. Die Schieberbohrung nimmt weiterhin mehrere koaxial zueinander angeordnete Führungselemente auf, wobei jeweils ein Einführungselement zwischen zwei Kanälen liegt, die in Abhängigkeit einer Stellung des Längsschiebers miteinander verbindbar sind. Die Führungselemente schließen in axialer Richtung bündig mit einer Gehäusewand der Mehrwegeventilgehäuses ab. Ein Nachteil dieser Lösung besteht darin, dass aufgrund von Temperaturdifferenzen ein Spalt zwischen einem Führungselement und dem diesen umgebenden Mehrwegeventilgehäuse entstehen kann. Hierüber kann Druckmittel ungewollt zwischen den Kanälen fließen.

Es ist daher die Aufgabe der vorliegenden Erfindung ein Mehrwegeventil der vorstehend beschriebenen Art dahingehend weiterzuverbessern, dass ein ungewolltes Überströmen von Druckmittel im Bereich der integrierten Führungselemente vermieden wird.

### Vorteile der Erfindung

Das Mehrwegeventilgehäuse mit den Merkmalen des Patentanspruchs 1 weist demgegenüber den Vorteil auf, dass es wesentlich kostengünstiger herzustellen ist, dass keine Flittergrate im Bereich der Schieberbohrung auftreten und dass im Betrieb ein Einströmvorgang von Druckmittel aus den Kanälen in die Schieberbohrung ohne unerwünschte Verwirbelungen gewährleistet ist.

Dies wird dadurch erreicht, daß jeweils ein Führungselement zwischen zwei druckmittelführenden Kanälen im Gehäuseinneren bzw. der Schieberbohrung des Mehrwegeventilgehäuses angeordnet ist, die in Abhängigkeit einer Stellung des Längsschiebers miteinander verbindbar sind, und daß der Einströmvorgang nicht durch einen Absatz zwischen dem Kanal und dem Führungselement, der Verwirbelungen verursachen würde, gestört wird.

Die Vermeidung von Flittergraten wird vorteilhafterweise dadurch erreicht, daß die separaten Führungselemente, welche beim Spritzvorgang von einer mehrteiligen Stempel-Schiebereinrichtung gehalten werden, formschlüssig und spaltfrei abgedichtet werden, so daß beim Spritzgießen kein Material bzw. Kunststoff des Mehrwegeventilgehäuses in die Trennebene zwischen die Stempel-Schiebereinrichtung und die Führungselemente eintreten kann.

Darüber hinaus weist die Anordnung jeweils eines Führungselements zwischen zwei druckmittelführenden Kanälen den Vorteil auf, daß eine Stempel-Schiebereinrichtung einfacher und kostengünstiger herstellbar ist als bei Lösungen nach dem Stand der Technik.

Weitere Vorteile oder vorteilhafte Weiterbildungen des Gegenstandes nach der Erfindung ergeben sich aus den Unteransprüchen, der Beschreibung und der Zeichnung.

### Zeichnung

Zwei Ausführungsbeispiele des Mehrwegeventil nach der Erfindung sind in der Zeichnung dargestellt und in der nachfolgenden Beschreibung näher erläutert. Es zeigen
Figur 1 ein Mehrwegeventilgehäuse mit zwei umspritzten Buchsen in einem Längsschnitt in schematisierter Darstellung; und
Figur 2 ein Mehrwegeventilgehäuse mit vier umspritzten Buchsen in einem Längsschnitt in schematisierter Darstellung.

### Beschreibung der Ausführungsbeispiele

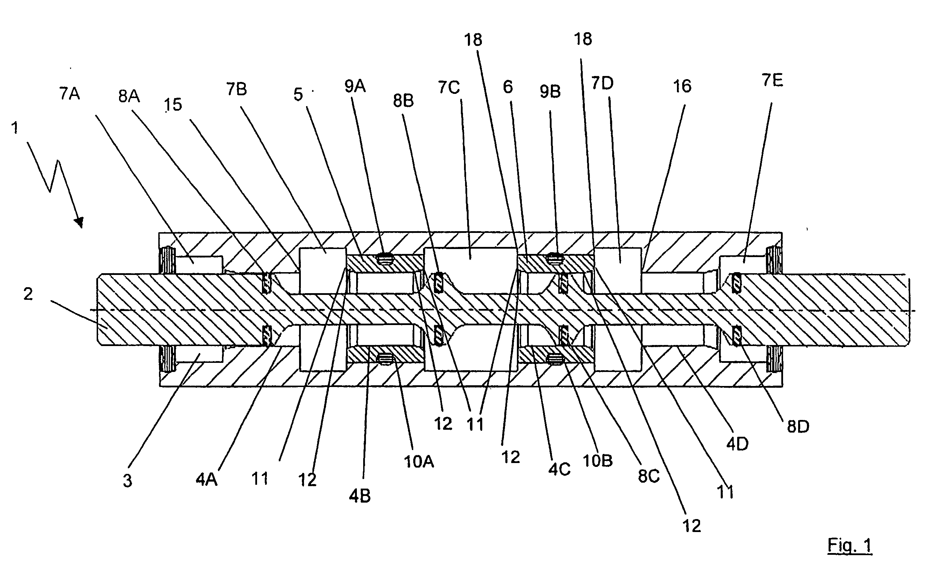

Figur 1 zeigt einen Schnitt durch ein Mehrwegeventilgehäuse 1 mit einem eingebauten Längsschieber 2. Der Längsschieber 2 sitzt in einer Schieberbohrung 3, welche über die axiale Länge des Mehrwegeventilgehäuses 1 verschiedene Durchmesser aufweist. Der Längsschieber 2 ist axial verschieblich in dem Mehrwegeventilgehäuse 1 geführt, wobei für den Längsschieber 2 mehrere Laufflächen 4A bis 4D vorgesehen sind. Die Laufflächen 4A und 4D sind direkt durch das Mehrwegeventilgehäuse gebildet und die Laufflächen 4B und 4C sind durch zwei in dem Mehrwegeventilgehäuse 1 eingespritzte Führungselemente 5, 6 gebildet.

Die Schieberbohrung 3 wird von fünf druckmittelführenden Kanälen 7A bis 7E geschnitten oder gekreuzt, wobei das Führungselement 5 zwischen den druckmittelführenden Kanälen 7B und 7C und das Führungselement 6 zwischen den druckmittelführenden Kanälen 7C und 7D angeordnet ist, welche jeweils in Abhängigkeit der Stellung des Längsschiebers 2 miteinander verbunden oder voneinander getrennt sind.

Das Mehrwegeventilgehäuse 1 ist aus einem Kunststoff hergestellt, der einen Glasfaseranteil aufweist, um die Festigkeit des Kunststoffes bzw. des Mehrwegeventilgehäuses 1 zu erhöhen und eine einwandfreie Funktion des Mehrwegeventilgehäuses 1 im Betrieb, bei dem Betriebsdrücke von ca. 8 bis 10 bar auftreten, zu gewährleisten. Die als Buchsen ausgeführten Führungselemente 5, 6 sind im vorliegenden Ausführungsbeispiel aus Aluminium hergestellt und werden einem Eloxierverfahren unterzogen.

Alternativ hierzu kann es vorgesehen sein, daß die Führungselemente 5, 6 aus Kunststoff, wie beispielsweise Polyoxymethylen (POM), hergestellt sind. Dabei können die Führungselemente 5, 6 unabhängig von der Werkstoffwahl nach einem spanabhebenden oder einem spanlosen Herstellverfahren gefertigt sein.

Im Falle der Herstellung der Führungselemente aus Kunststoff ist jedoch darauf zu achten, daß der Kunststoff keinerlei die Festigkeit der Führungselemente erhöhende Anteile aufweist, die eine Beschädigung von Dichtelementen 8A bis 8D des Längsschiebers 2 bei dem Überfahren der Laufflächen 4B und 4C verursachen könnten.

Die Führungselemente 5, 6 sind auf ihrer der Schieberbohrung 3 zugewandten Außenseite mit jeweils einer ringförmigen Ausnehmung 9A, 9B versehen, in welcher jeweils ein Dichtkörper 10A, 10B zum Abdichten der jeweils benachbart angeordneten Kanäle 7B und 7C bzw. 7C und 7D vorgesehen ist.

Die inneren Durchmesser der Stirnseiten der Führungselemente 5, 6 stellen jeweils Steuerkanten des Mehrwegeventilgehäuses 1 dar, wobei die Führungselemente 5, 6 am Übergang der Stirnseiten zu den Laufflächen 4B, 4C jeweils eine Abrundung 11 aufweisen. Weiter sind die Führungselemente 5, 6 im Bereich ihrer Stirnseiten jeweils mit einer in einen Innenraum der Führungselemente 5, 6 verlaufenden Schräge 12 versehen, welche sich jeweils an eine Abrundung 11 anschließt. Die Schrägen 12 schließen jeweils mit einer Lauffläche 4B, 4C einen Winkel in einem Bereich von 15° bis 30° ein, so daß die Dichtelemente 8B, 8C beim Eintritt in die Führungselemente 5, 6 sanft in diese eingleiten, ohne dabei beschädigt zu werden.

Die Führungselemente 5, 6 sind fest in das Mehrwegeventilgehäuse 1 integriert. Dazu werden sie vor dem Kunststoffspritzgießen des Mehrwegeventilgehäuses 1 in eine dafür vorgesehene Spritzgußform eingelegt und anschließend mit Kunststoff umspritzt. Die Öffnungen der Führungselemente 5, 6 werden hierbei mit Hilfe von Werkstückträgern der Spritzgußform und Stempeln verschlossen. Aufgrund der Anordnung eines separaten Führungselementes 5 bzw. 6 zwischen zwei benachbart zueinander angeordneten druckmittelführenden Kanälen 7B, 7C bzw. 7C, 7D besteht die Möglichkeit, die Führungselemente 5, 6 und das diese umschließende Mehrwegeventilgehäuse 1 derart exakt mittels Spritzgießen herzustellen, daß keinerlei Grate bzw. Flittergrate entstehen, die im Betrieb eines Mehrwegeventilgehäuses sich ablösen und die Funktionsweise erheblich beeinträchtigen könnten.

Darüber hinaus ist es gewährleistet, daß eine Gehäusewand 18 des Mehrwegeventilgehäuses 1 in axialer Richtung jeweils mit den Stirnflächen der Führungselemente 5, 6 bündig abschließt und das in das Mehrwegeventilgehäuse 1 einströmende oder aus diesem strömende Druckmittel an dem Übergang zwischen dem Mehrwegeventilgehäuse 1 und dem Führungselementen 5, 6 nicht verwirbelt wird. Damit wird ein störungsfreier Durchfluß ermöglicht, der eine bauraumbedarfsoptimierte Gestaltung des Mehrwegeventilgehäuses erlaubt.

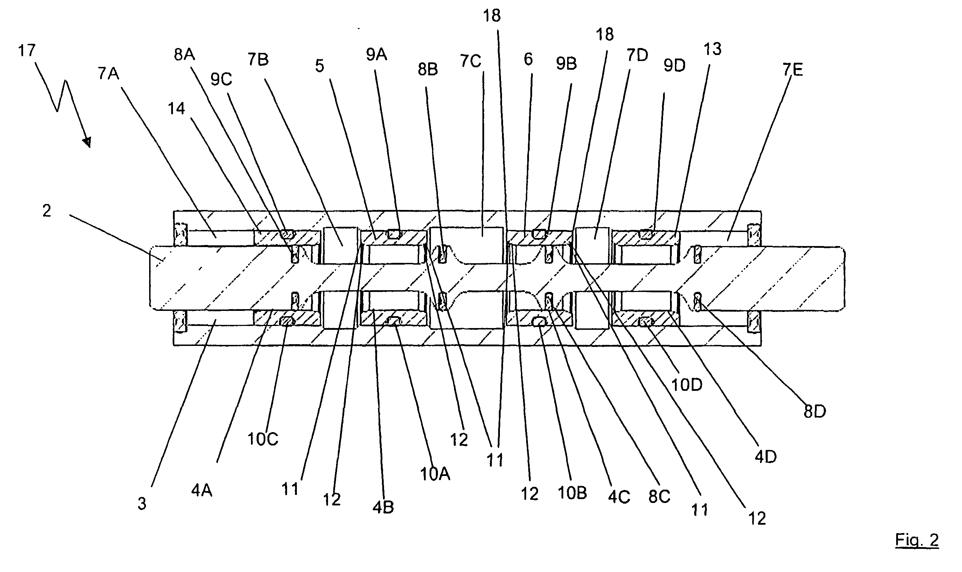

In der Figur 2 ist eine weitere Ausführungsform eines Mehrwegeventilgehäuses 17 dargestellt, wobei für baugleiche bzw. funktionsgleiche Bauteile die gleichen Bezugszeichen wie in der Figur 1 verwendet werden. Abweichend von der Ausführungsform des Mehrwegeventilgehäuses 1 gemäß der Figur 1 sind die Laufflächen 4A und 4D durch zwei weitere Führungselemente 13, 14, die ebenfalls in dem Mehrwegeventilgehäuse 17 eingespritzt sind, ausgebildet. Damit sind die scharf ausgebildeten Steuerkanten 15, 16 des Mehrwegeventilgehäuses 1 gemäß Figur 1 ohne eine zusätzliche spanabhebende Bearbeitung eines Mehrwegeventilgehäuses eliminiert, da diese durch eine Abrundung und eine sich daran anschließende Schräge der Führungselemente 13 und 14, die den Abrundungen 11 und den Schrägen 12 der Führungselementen 5, 6 entsprechen, ersetzt sind.

Die Abrundungen und Schrägen der Führungselemente 13, 14 sind an der gleichen Position wie die Abrundungen und die Schrägen der Führungselemente 5, 6 vorgesehen und gewährleisten ein sanftes Eingleiten des Längsschiebers 2 in die Führungselemente 13, 14. Zusätzlich sind die Führungselemente 13, 14 an ihrer der Schieberbohrung 3 zugewandten Außenfläche jeweils mit einer Ausnehmung 9C, 9D ausgebildet, in der Dichtelemente 10C, 10D zum Abdichten der Kanäle 7A und 7B bzw. 7D und 7E zueinander eingelegt sind.

## Patentansprüche

1. Mehrwegeventil (1; 17) aus spritzgegossenem Kunststoff mit einer für einen Längsschieber (2) vorgesehenen Schieberbohrung (3), welche von mehreren druckmittelführenden Kanälen (7A-7E) geschnitten oder gekreuzt ist und wenigstens zwei Führungselemente (5, 6; 13, 14) aufnimmt, welche zumindest in Teilbereichen von umspritztem Kunststoff umgeben sind, wobei jeweils ein Führungselement (5, 6) zwischen zwei Kanälen (7B, 7C bzw. 7C, 7D) liegt, die in Abhängigkeit einer Stellung des Längsschiebers (2) miteinander verbindbar sind,
**dadurch gekennzeichnet, dass** die Führungselemente (5, 6) in axialer Richtung beidseits bündig mit einer Gehäusewand (18) des Mehrwegeventilgehäuses (1; 17) abschließen, wobei jeweils ein Führungselement (5, 6) auf seiner der Schieberbohrung (3) des Mehrwegeventilgehäuses (1; 17) zugewandten Außenseite eine ringförmige Ausnehmung (9A, 9B) aufweist, in welcher ein Dichtkörper (10A bzw. 10B) zum Abdichten der zwei benachbart angeordneten Kanäle (7B, 7C; 7C, 7D) vorgesehen ist.

2. Mehrwegeventil nach Anspruch 1,
**dadurch gekennzeichnet, dass** die Führungselemente (5, 6; 13, 14) als Buchsen ausgeführt sind.

3. Mehrwegeventil nach einem der Ansprüche 1 bis 2,
**dadurch gekennzeichnet, dass** die inneren Durchmesser der Stirnseiten der Führungselemente (5, 6; 13, 14) Steuerkanten des Mehrwegeventilgehäuses (1; 17) darstellen, welche vorzugsweise mit einer Abrundung (11) ausgebildet sind.

4. Mehrwegeventil nach Anspruch 3,
**dadurch gekennzeichnet, dass** die Führungselemente (5, 6; 13, 14) im Bereich ihrer Stirnseiten jeweils eine in Richtung der Laufflächen (4A bis 4D) der Führungselemente (5, 6; 13, 14) verlaufende Schrägen (12) aufweisen.

5. Mehrwegeventil nach Anspruch 4,
**dadurch gekennzeichnet, dass** die Schrägen (12) mit den Laufflächen (4A bis 4D) der Führungselemente (5, 6; 13, 14) vorzugsweise einen Winkel in einem Bereich von 15° bis 30° einschließen.

6. Mehrwegeventil nach einem der Ansprüche 1 bis 5,
**dadurch gekennzeichnet, dass** die Führungselemente (5, 6; 13, 14) jeweils als Spritzgussteil ausgeführt sind.

7. Mehrwegeventil nach einem der Ansprüche 1 bis 5,
**dadurch gekennzeichnet, dass** die Führungselemente (5, 6; 13, 14) jeweils als Drehteil ausgeführt sind.

8. Mehrwegeventil nach einem der Ansprüche 1 bis 7,
**dadurch gekennzeichnet, dass** die Führungselemente (5, 6; 13, 14) aus Kunststoff, vorzugsweise Polyoxymethylen, gefertigt sind.

9. Mehrwegeventil nach einem der Ansprüche 1 bis 7,
**dadurch gekennzeichnet, dass** die Führungselemente (5, 6; 13, 14) aus Metall, vorzugsweise aus Aluminium, gefertigt sind.

## Claims

1. A multiport valve (1; 17) of injection-moulded plastic material, comprising, for a longitudinal slide (2), a slide bore (3) which is intersected or crossed by a plurality of pressure medium-bearing channels (7A-7E) and receives at least two guiding elements (5, 6; 13, 14) which are surrounded, at least in part, by plastic material injection moulded around it, wherein one guiding element (5, 6) lies, respectively, between each pair of two channels (7B, 7C and 7C, 7D, respectively), which can be connected with one another depending on the position of the longitudinal slide (2),
**characterised in that** said guiding elements (5, 6) are flush with a housing wall (18) of the multiport valve on either side in an axial direction, wherein one guiding element (5; 6), on its outer surface facing the slide bore (3) of the multiport valve housing (1; 17), has an annular recess (9A, 98), in which a sealing body (10A and 10B, respectively) is provided for sealing the two neighbouring channels (7B, 7C; 7C, 7D).

2. The multiport valve according to claim 1,
**characterised in that** said guiding elements (5, 6; 13, 14) are bushings.

3. The multiport valve according to any one of claims 1 to 2,
**characterised in that** the inner diameter of the end faces of the guiding elements (5, 6; 13, 14) are guiding edges of the multiport valve housing (1; 17), which are preferably provided with a rounding (11).

4. The multiport valve according to claim 3,
**characterised in that** each of the guiding elements (5, 6; 13, 14), in the area of their end faces, has bevellings (12) extending in the direction of the running surfaces (4A to 4D) of said guiding elements (5, 6; 13, 14).

5. The multiport valve according to claim 4,
**characterised in that** said bevellings (12) preferably form an angle with the running surfaces (4A to 4D) of the guiding elements (5, 6; 13, 14) in the area of between 15° and 30°.

6. The multiport valve according to any one of claims 1 to 5,
**characterised in that** each of said guiding elements (5, 6; 13, 14) is made as an injection-moulded part.

7. The multiport valve according to any one of claims 1 to 5,
**characterised in that** each of said guiding elements (5, 6; 13, 14) is made as a turned part.

8. The multiport valve according to any one of claims 1 to 7,
**characterised in that** said guiding elements (5, 6; 13, 14) are made of a plastic material, preferably of polyoxymethylene.

9. The multiport valve according to any one of claims 1 to 7,
**characterised in that** said guiding elements (5, 6; 13, 14) are made of metal, preferably aluminium.

## Revendications

1. Distributeur à plusieurs voies (1 ; 17) en matière plastique injectée, et présentant un perçage à tiroir (3) prévu pour un tiroir allongé (2), ledit perçage étant recoupé ou croisé par plusieurs canaux (7A-7E) menant des fluides sous pression, et recevant au moins deux éléments de guidage (5, 6 ; 13, 14) qui sont entourés au moins dans des zones partielles par enrobage de matière plastique, un élément de guidage respectif (5, 6) étant disposé entre deux canaux (7B, 7C, ou 7C, 7D), qui peuvent être mis en liaison l'un avec l'autre en dépendance de la position du tiroir allongé (2),
**caractérisé en ce que** les éléments de guidage (5, 6) se terminent en direction axiale et sur les deux côtés en affleurement avec une paroi (18) du boîtier du distributeur à plusieurs voies (1 ; 17), et **en ce qu'**un élément de guidage (5 ; 6) respectif présente, sur sa face extérieure tournée vers le perçage à tiroir (3) du boîtier du distributeur à plusieurs voies (1 ; 17), un évidement de forme annulaire (9A, 9B) dans lequel est prévu un corps d'étanchement (10A, ou 10B) pour étancher les deux canaux (7B, 7C ; 7C, 7D) agencés voisins.

2. Distributeur à plusieurs voies selon la revendication 1, **caractérisé en ce que** les éléments de guidage (5, 6 ; 13, 14) sont réalisés sous forme de douilles.

3. Distributeur à plusieurs voies selon l'une ou l'autre des revendications 1 et 2, **caractérisé en ce que** le diamètre intérieur des faces frontales des éléments de guidage (5, 6 ; 13, 14) représente des arêtes de commande du boîtier du distributeur à plusieurs voies (1 ; 17), lesdites arêtes étant de préférence réalisées avec un arrondi (11).

4. Distributeur à plusieurs voies selon la revendication 3, **caractérisé en ce que** les éléments de guidage (5, 6 ; 13, 14) présentent, dans la région de leur face frontale, une pente respective (12) qui s'étend en direction des surfaces de portée (4A à 4D) des éléments de guidage (5,6 ; 13,14).

5. Distributeur à plusieurs voies selon la revendication 4, **caractérisé en ce que** les pentes (12) forment avec les surfaces de portée (4A à 4D) des éléments de guidage (5, 6 ; 13, 14) de préférence un angle dans une plage de 15 à 30°.

6. Distributeur à plusieurs voies selon l'une des revendications 1 à 5, **caractérisé en ce que** les éléments de guidage (5, 6 ; 13, 14) sont réalisés chacun sous forme de pièce moulée par injection.

7. Distributeur à plusieurs voies selon l'une des revendications 1 à 5, **caractérisé en ce que** les éléments de guidage (5, 6 ; 13, 14) sont réalisés chacun sous forme de pièce tournée.

8. Distributeur à plusieurs voies selon l'une des revendications 1 à 7, **caractérisé en ce que** les éléments de guidage (5, 6 ; 13, 14) sont fabriqués en matière plastique, de préférence en polyoxyméthylène.

9. Distributeur à plusieurs voies selon l'une des revendications 1 à 7, **caractérisé en ce que** les éléments de guidage (5, 6 ; 13, 14) sont fabriqués en métal, de préférence en aluminium.
